(19) Europäisches Patentamt
European Patent Office
Office européen des brevets

(11) **EP 4 408 926 B1**

(12) **EUROPEAN PATENT SPECIFICATION**

(45) Date of publication and mention
of the grant of the patent:
**15.10.2025  Bulletin 2025/42**

(21) Application number: **22785931.1**

(22) Date of filing: **09.09.2022**

(51) International Patent Classification (IPC):
*C08L 23/12* (2006.01)        *C08L 23/14* (2006.01)

(52) Cooperative Patent Classification (CPC):
(C-Sets available)
**C08L 23/142; C08L 23/12;** C08L 2205/08;
C08L 2207/02; C08L 2207/20        (Cont.)

(86) International application number:
**PCT/EP2022/075094**

(87) International publication number:
**WO 2023/052083 (06.04.2023 Gazette 2023/14)**

(54) **SOFT POLYPROPYLENE COMPOSITIONS**

WEICHE POLYPROPYLENZUSAMMENSETZUNGEN

COMPOSITION DE POLYPROPYLÈNE SOUPLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.09.2021  EP 21199319**

(43) Date of publication of application:
**07.08.2024  Bulletin 2024/32**

(73) Proprietor: **Basell Poliolefine Italia S.r.l.
20121 Milano (IT)**

(72) Inventors:
• **CAVALIERI, Claudio
44122 Ferrara (IT)**
• **COVA, Cristina
44122 Ferrara (IT)**

(74) Representative: **LyondellBasell
c/o Basell Poliolefine Italia
Intellectual Property
P.le Donegani 12
44122 Ferrara (IT)**

(56) References cited:
**WO-A1-03/011962        WO-A1-2013/144060
WO-A1-2017/122022    US-A1- 2018 237 625**

(52) Cooperative Patent Classification (CPC): (Cont.)

C-Sets
**C08L 23/12, C08L 23/16, C08L 53/02;**
**C08L 23/142, C08L 23/16, C08L 53/02**

**Description**

FIELD OF THE INVENTION

The present disclosure relates to soft polypropylene compositions containing recycled elastomeric material that can be used in preparation of extruded articles in particular for roofing applications.

BACKGROUND OF THE INVENTION

Polyolefin compositions having elastic properties while maintaining a good thermoplastic behavior have been used in many application fields, due to the valued properties which are typical of polyolefins, such as chemical inertia, mechanical properties and nontoxicity. Moreover, they can be advantageously transformed into finished products with the same techniques used for thermoplastic polymers. In particular, flexible polymer materials are widely used in the medical field, as well as for packaging, extrusion coating and electrical wires and cables covering.

Elastic polypropylene compositions retaining good thermoplastic behavior have been obtained in the art by way of sequential copolymerization of propylene, optionally containing minor quantities of olefin comonomers, and then ethylene/propylene or ethylene/alpha-olefin copolymers mixtures. Catalysts based on halogenated titanium compounds supported on magnesium chloride are commonly used for this purpose. For instance, EP-A-472 946 describes flexible elastoplastic polyolefin compositions comprising, in parts by weight: A) 10-50 parts of an isotactic propylene homopolymer or copolymer; B) 5-20 parts of an ethylene copolymer, insoluble in xylene at room temperature; and C) 40-80 parts of an ethylene/propylene copolymer containing less than 40% by weight of ethylene and being soluble in xylene at room temperature; the intrinsic viscosity of said copolymer is preferably from 1.7 to 3 dl/g. Said compositions are relatively flexible and have good elastic properties, however, such values are not fully satisfactory for some applications, particularly for roofing applications where an increased extent of softness and flexibility is required while at the same time keeping at the required level mechanical properties such as tear and puncture resistance.

Documents WO 03 011962, WO 2013 144060, WO 2017 122022 and US 2018 237 625 deal with soft and elastic polyolefin compositions.

In addition, polyolefin compositions, although being appreciated in terms of performances, give raise to concerns in terms of sustainability with particular reference to the fact that their production is based on the use of non-renewable sources.

As a result, a common attempt to mitigate the problem is that of replacing, at least in part, virgin polyolefin compositions with variable amounts of recycled plastic materials.

The recycled plastic polyolefin derive from streams of post-consumer waste (PCW) or post-industrial waste (PIW).

One of the key problems in polyolefin recycling, is the difficulty to quantitatively separate the various types of polymers so that the commercially available recycled products are almost invariably contaminated with heterogeneous materials of various source.

This fact leads to the consequence that polymer compositions including recycled materials are perceived of being affected by lower reliability and lower performances with respect to the compositions made of solely virgin polymers.

It has now been unexpectedly found that certain polypropylene compositions for the use in roofing applications, due to the presence of a recycled elastomeric component have an improved property profile and allow the process for their production to be more sustainable.

SUMMARY OF THE INVENTION

It is therefore an object of the present disclosure a propylene polymer composition having a value of melt flow rate (ISO 1133 230°C/2.16 kg) ranging from 0.4 g/10min to 1.4 g/10min, preferably 0.5 to 1.2 g/10min, more preferably from 0.6 to 1.0 g/10min comprising (per cent by weight unless otherwise specified):

A) 65 to 95%, preferably from 70 to 93, more preferably from 75 to 92% by weight of a polypropylene composition having a MFR ranging from 0.2 to 1.2 g/10', said polypropylene composition comprising:

- from 15 to 40% by weight, preferably from 20 to 35% by weight of a polymer fraction (a) comprising a propylene homopolymer, or a copolymer of propylene with one or more comonomers selected from ethylene and a $CH_2=CHR$ alpha-olefin, where R is a $C_2$-$C_8$ alkyl radical, or mixtures thereof; said copolymers containing at least 85% by weight of units derived from propylene, said fraction being insoluble in xylene at 25°C for at least 90% by weight, preferably having intrinsic viscosity of the xylene insoluble fraction of from 1.2 to 1.9 dl/g and preferably a melt flow rate (ISO 1133 230°C/2.16 kg) of from 2 to 70, more preferably of from 15 to 40 g/10min.; and

- from 60 to 85% by weight, preferably from 65 to 80% by weight of a polymer fraction (b) comprising a copolymer of ethylene with comonomers selected from propylene and $CH_2$=CHR alpha-olefins, where R is a $C_2$-$C_8$ alkyl radical, and optionally with minor quantities of a diene, or mixtures thereof; said copolymers containing units derived from ethylene in a quantity lower than 40% by weight, said polymer fraction (b) having solubility in xylene at room temperature (25°C) greater than 60% by weight, the total percentage of fractions (a) and (b) fractions being 100, and

(B) from 5 to 35%, preferably 7 to 30%, more preferably from 8 to 25% of recycled styrene block copolymer (SBC) having a melt flow rate (ISO 1133 230°C/2.16 kg) from 0.5 to 15 g/10 min; the percentages of (A) and (B) being referred to the sum of (A) and (B).

## DETAILED DESCRIPTION OF THE INVENTION

The term "copolymer" as used herein refers to both polymers with two different recurring units and polymers with more than two different recurring units, such as terpolymers, in the chain. By "ambient or room temperature" is meant therein a temperature of about 25 °C.

By the term "crystalline propylene polymer" is meant in the present application a propylene polymer having an amount of isotactic pentads (mmmm), measured by $^{13}$C-MNR on the fraction insoluble in xylene at 25° C, higher than 70 molar %; by "elastomeric" polymer is meant a polymer having solubility in xylene at ambient temperature higher than 50 wt%.

The term "consisting essentially of", as used herein in connection with a polymer or polymer composition means that, in addition to those components which are mandatory, other components may also be present in the polymer or in the polymer composition, provided that the essential characteristics of the polymer or of the composition are not materially affected by their presence. According to the present disclosure, examples of components that, when present in customary amounts in a polymer or in a polymer composition, do not materially affect their characteristics are the catalyst residues, antistatic agents, melt stabilizers, light stabilizers, antioxidants, antiacids.

The features of the components forming the polypropylene composition are not inextricably linked to each other. This means that a certain level of preference of one the features should not necessarily involve the same level of preference of the remaining features of the same or different components. On the contrary, it is intended in the present disclosure that any component (A) to (B) and any preferred range of features of components (A) to (B) can be combined with any preferred range of one or more of the features of components (A) to (B) and with any possible additional component, and its features, described in the present disclosure.

The polymer fraction (a) is preferably selected from propylene copolymers containing from 1.0 to 10.0wt%, preferably from 2.0 to 8.0wt% of ethylene or a $C_4$-$C_{10}$ $\alpha$-olefin or combination thereof. Most preferably the comonomer is ethylene.

Preferably, in the polymer fraction (a) the amount of isotactic pentads (mmmm), measured by $^{13}$C-MNR on the fraction insoluble in xylene at 25°C, is higher than 96.5 molar% and preferably higher than 97 molar % with respect all propylene units.

Preferably, the polymer fraction (a) shows a molecular weight distribution, expressed by the ratio between the weight average molecular weight and numeric average molecular weight, (Mw/Mn) , measured by GPC, equal to or higher than 5.0, in particular from 7 to 20.

Preferably, the polydispersity index of the polymer fraction (a) ranges from 3 to 10.

The melt flow rate (ISO 1133 230°C/2.16 kg) of polymer fraction (a) preferably ranges from 10 to 50 g/10 min, more preferably from 15 to 40 g/10' and especially from 20 to 35 g/10'.

The polymer fraction (a) is preferably insoluble in xylene at 25°C for at least 95% by weight and more preferably totally insoluble.

The polymer fraction (b) is preferably an ethylene-propylene copolymer. The amount of ethylene in the copolymer preferably ranges from 20 to 35wt.% more preferably from 23 to 30wt. %.

Polymer fraction (b) exhibits a solubility in xylene at 25°C preferably higher than 65 wt%, more preferably higher than 75 wt %, especially higher than 90% of the whole copolymer (b). In a very preferred embodiment, the polymer fraction (b) is totally soluble in xylene at 25°C. The intrinsic viscosity of the xylene soluble fraction at 25°C is preferably higher than 2.0 dl/g and preferably ranging from 2.5 to 5 and more preferably from 2.8 to 4 dl/g.

The polypropylene composition (A) has a melt flow rate preferably ranging from 0.3 to 1.0 g/10'. The total ethylene content preferably ranges from 15.0 to 28.0%wt, more preferably from 16.0 to 23.0% and especially from 17 to 22% wt based on the total weight of polypropylene composition (A).

In terms of physical properties, the polypropylene composition (A) of the present disclosure preferably shows a tensile modulus value ranging from 40 to 250 MPa, preferably from 50 to 200 MPa, even more preferably from 60 to 150 MPa.

The value of stress at break preferably ranges from 5 to 40 more preferably from 10 to 30 N/mm$^2$.

The value of Shore D (15 sec) preferably ranges from 25 to 40.

The value of tear resistance preferably ranges from 50 to 100 N more preferably from 60 to 90N.

The value of the puncture resistance (max force) preferably ranges from 150 to 350 N more preferably from 200 to 300 N.

The value of the puncture resistance (deformation at break) preferably ranges from 20 to 80mm more preferably from 30 to 50mm.

The polypropylene composition (A) may be prepared by polymerization in sequential polymerization stages, with each subsequent polymerization being conducted in the presence of the polymeric material formed in the immediately preceding polymerization reaction. The polymerization stages may be carried out in the presence of a Ziegler-Natta catalyst. According to a preferred embodiment, all the polymerization stages are carried out in the presence of a catalyst comprising the product of the reaction between:

> i) a solid catalyst component comprising Ti, Mg, Cl, and at least an internal electron donor compound;
> ii) an alkylaluminum compound and,
> iii) an external electron-donor compound having the general formula:
> $(R^7)a(R^8)bSi(OR^9)c$, where a and b are integers from 0 to 2, c is an integer from 1 to 4 and the sum $(a+b+c)$ is 4; $R^7$, $R^8$, and $R^9$, are alkyl, cycloalkyl or aryl radicals with 1-18 carbon atoms optionally containing heteroatoms.

The internal donor is preferably selected from the esters of mono or dicarboxylic organic acids such as benzoates, malonates, phthalates and certain succinates. Examples of internal donors are described in US4,522,930, EP045977A2 and international patent applications WO00/63261 and WO01/57099. Particularly suited are the phthalic acid esters, such as diisobutyl, dioctyl and diphenyl phthalate and benzyl-butyl phthalate.

The particles of solid component (i) may have substantially spherical morphology and average diameter ranging between 5 and 150$\mu$m, preferably from 20 to 100$\mu$m and more preferably from 30 to 90$\mu$m. As particles having substantially spherical morphology, those are meant wherein the ratio between the greater axis and the smaller axis is equal to or lower than 1.5 and preferably lower than 1.3.

According to one method, the solid catalyst component (i) can be prepared by reacting a titanium compound of formula Ti(OR)q-yXy, where q is the valence of titanium and y is a number between 1 and q, preferably TiCl$_4$, with a magnesium chloride deriving from an adduct of formula MgCl$_2$•pROH, where p is a number between 0.1 and 6, preferably from 2 to 3.5, and R is a hydrocarbon radical having 1-18 carbon atoms. The adduct can be suitably prepared in spherical form by mixing alcohol and magnesium chloride, operating under stirring conditions at the melting temperature of the adduct (100°-130°C). Then, the adduct is mixed with an inert hydrocarbon immiscible with the adduct thereby creating an emulsion which is quickly quenched causing the solidification of the adduct in form of spherical particles. Examples of spherical adducts prepared according to this procedure are described in USP4,399,054 and US4,469,648. The so obtained adduct can be directly reacted with Ti compound or it can be previously subjected to thermal controlled dealcoholation (80°-130°C) so as to obtain an adduct in which the number of moles of alcohol is of lower than 3, preferably between 0.1 and 2.5. The reaction with the Ti compound can be carried out by suspending the adduct (dealcoholated or as such) in cold TiCl$_4$; the mixture is heated up to 80°-130°C and kept at this temperature for 0.5-2 hours. The treatment with TiCl$_4$ can be carried out one or more times. The electron donor compound can be added in the desired ratios during the treatment with TiCl$_4$.

The alkyl-Al compound (ii) is preferably chosen among the trialkyl aluminum compounds such as for example triethylaluminum, triisobutylaluminum, tri-n-butylaluminum, tri-n-hexylaluminum, tri-n-octylaluminum. It is also possible to use alkylaluminum halides, alkylaluminum hydrides or alkylaluminum sesquichlorides, such as AlEt$_2$Cl and Al$_2$Et$_3$Cl$_3$, possibly in mixture with the above cited trialkylaluminums. The Al/Ti ratio is higher than 1 and may preferably range between 50 and 2000.

Particularly preferred are the silicon compounds (iii) in which a is 1, b is 1, c is 2, at least one of $R^7$ and $R^8$ is selected from branched alkyl, cycloalkyl or aryl groups with 3-10 carbon atoms optionally containing heteroatoms and $R^9$ is a $C_1$-$C_{10}$ alkyl group, in particular methyl. Examples of such preferred silicon compounds are methylcyclohexyldimethoxysilane (C donor), diphenyldimethoxysilane, methyl-t-butyldimethoxysilane, dicyclopentyldimethoxysilane (D donor), diisopropyldimethoxysilane, (2-ethylpiperidinyl)t-butyldimethoxysilane, (2-ethylpiperidinyl)thexyldimethoxysilane, (3,3,3-trifluoro-n-propyl)(2-ethylpiperidinyl)dimethoxysilane, methyl(3,3,3-trifluoro-n-propyl)dimethoxysilane. Moreover, are also preferred the silicon compounds in which a is 0, c is 3, $R^8$ is a branched alkyl or cycloalkyl group, optionally containing heteroatoms, and $R^9$ is methyl. Examples of such preferred silicon compounds are cyclohexyltrimethoxysilane, t-butyltrimethoxysilane and thexyltrimethoxysilane.

The external electron donor compound (iii) is used in such an amount to give a molar ratio between the organoaluminum compound and said external electron donor compound (iii) of from 0.1 to 200, preferably from 1 to 100 and more preferably from 3 to 50.

Examples of polymerization processes for the preparation of said compositions can be found in EP472946A, the relevant part of which is incorporated herein by reference

All the polymerization stages preferably occur in gas phase. The reaction temperature in the polymerization stage for the preparation of the polymer fraction (a) and in the preparation of the copolymer fraction (b) can be the same or different, and is preferably from 40° to 90°C; more preferably, the reaction temperature ranges from 50° to 80°C in the preparation of the fraction (a), and from 40° to 80°C for the preparation of components (b). The pressure of the polymerization stages to prepare the fractions (a) and (b), is from 5 to 30bar in gas phase. The residence times relative to the two stages depend on the desired ratio between the fractions (a) and (b), and can usually range from 15 minutes to 8 hours. Conventional molecular weight regulators known in the art, such as chain transfer agents (e.g. hydrogen or $ZnEt_2$), may be used.

If needed, the final composition comprising (a)+(b) can be subject to a chemical treatment with organic peroxides in order to lower the average molecular weight and increase the melt flow index up to the value needed for the specific application.

The component B is a recycled styrene block copolymer (r-SBC).

Styrene block copolymers are widely known in the art. These block copolymers have blocks derived from a diene, such as polybutadiene or polyisoprene blocks, and blocks derived from polystyrene or derivatives thereof. The block copolymers may be of different types, for example of the AB, ABA, A(B)4 type. The said block copolymers may be hydrogenated; a mixture of two or more of the above-mentioned block copolymers may be used.

Preferably, the styrene block copolymer according to the present invention has formula A-B-A', where A and A' are each a thermoplastic endblock which includes a styrenic moiety and where B is an elastomeric elastomeric polybutadiene, poly(ethylenebutylene) or poly(ethylenepropylene) midblock. Preferably, the A and A' endblocks of the block copolymer are identical and are selected from the group consisting of polystyrene and polystyrene homologs, and even more preferably the A and A' endblocks are polystyrene or poly(alphamethylstyrene).

Particularly preferred is the use of recycled styrene-butadiene-styrene block copolymers, referred to as SBS.

Being recycled components, preferably of pre-consumer waste origin, they include minor amounts of heterogeneous polymer and/or non-polymeric components.

Preferably, the recycled styrene block copolymer contains from 1 to 15wt%, more preferably from 3 to 12wt% of other components selected from polyethylene, polypropylene and inorganic additives. Particularly preferred is the recycled styrene block copolymer containing a propylene homopolymer, an ethylene polymer and talc as inorganic additive.

Preferably, the (r-SBC) has a melt flow rate (ISO 1133 230°C/2.16 kg) from 1.0 to 10 g/10min and more preferably from 2.0 to 8.0 g/10min.

Moreover, the r-SBC is preferably characterized by a density ranging from 0.95 to 0.965 g/cm$^3$, more preferably in the range 0.960 to 0.965 g/cm$^3$ (ISO 1183-1). As an additional feature, its Shore D is preferably lower than 45 and more preferably lower than 40 and especially lower than 30.

The whole polypropylene composition of the present disclosure preferably shows a tensile modulus value lower than that of the composition (I) and more preferably equal to or lower than the value obtained by applying the equation TMod(A)·(x)+TMod(B)·(1-x) where TMod(A) is the tensile modulus of component A alone, TMod(B) is the tensile modulus of component (B) alone and x is the weight percentage of component (A) based on the total weight of (A)+(B) only. In a particularly preferred embodiment, the tensile modulus of the whole propylene polymer composition ranges from 20 to 110 MPa more preferably from 30 to 100 MPa.

The value of stress at break and tear resistance are preferably in line with those of the component (A) alone.

The value of Shore D (15 sec) is lower than that of the component (A) and more preferably equal to or lower than the value obtained applying the equation ShoreD(A)·(x)+ShoreD(B)·(1-x) where ShoreD(A) is the Shore D value of polypropylene composition (A) alone, ShoreD(B) is the Shore D value of component (B) alone and x is the weight percentage of component (A) based on the total weight of (A)+(B) only. In a particularly preferred embodiment, the Shore D value of the polypropylene composition is lower than 35 and more preferably lower than 30.

The propylene polymer composition of the present disclosure preferably shows a value of the puncture resistance in line or better than that of the polypropylene composition (A) alone and preferably in the range (max force) of from 150 to 350 N more preferably from 200 to 300 N.

The whole propylene composition of the present disclosure can be obtained by mechanical blending of the components (A) and (B) according to conventional techniques.

According to a preferred method of preparation, component (B) is mechanically blended with a preformed polypropylene composition (A) comprising the components (a) and (b) associated together by means of the already disclosed a sequential copolymerization process.

The final composition comprising the components (A) and (B) may be added with conventional additives, fillers and pigments, commonly used in olefin polymers such as nucleating agents, extension oils, mineral fillers, and other organic and inorganic pigments. In particular, the addition of inorganic fillers, such as talc, calcium carbonate and mineral fillers, also brings about an improvement to some mechanical properties, such as flexural modulus and HDT. Talc can also have a nucleating effect.

The nucleating agents may be added to the compositions of the present disclosure in quantities ranging from 0.05 to 2wt%, more preferably from 0.1 to 1wt%, with respect to the total weight, for example.

The propylene polymer composition of the present disclosure can be extruded to form films or sheets for a variety of applications. Particularly preferred is the use of the polypropylene composition for the preparation of sheets for roofing applications.

As shown in the examples below, the composition employing r-SBC show a synergistic behaviour with the component A. In fact, the increase in softness (lowering of tensile modulus and Shore D) is more pronounced than expected based on the linear combination of (A)+(B). At the same time, other features such as tear resistance and elongation at break maintain the same desired values.

The following examples are given in order to illustrate, but not limit the present disclosure.

## EXAMPLES

## CHARACTERIZATIONS

### Xylene-soluble (XS) Fraction at 25 °C

2.5 g of polymer and 250 ml of xylene are introduced in a glass flask equipped with a refrigerator and a magnetic stirrer. The temperature is raised in 30 minutes up to the boiling point of the solvent. The resulting clear solution is then kept under reflux and stirred for 30 minutes. The closed flask is then kept for 30 minutes in a bath of ice and water, then in a thermostatic water bath at 25 °C for 30 minutes. The resulting solid is filtered on quick filtering paper. 100 ml of the filtered liquid is poured in a previously weighed aluminum container, which is heated on a heating plate under nitrogen flow to remove the solvent by evaporation. The container is then kept on an oven at 80 °C under vacuum until a constant weight is obtained. The weight percentage of polymer soluble in xylene at room temperature is then calculated.

The content of the xylene-soluble fraction is expressed as a percentage of the original 2.5 grams and then, by the difference (complementary to 100%), the xylene insoluble percentage (%);

XS of components (a) and/or (b) can be calculated by using the formula:

$$XStot = WaXSA + WbXSB$$

wherein Wa, Wb and are the relative amount of components (a) and (b) respectively, and (a)+(b)=1.

### Melt Flow Rate (MFR)

Measured according to ISO 1133 at 190°C or 230 °C with a load of 2.16 kg, as specified.

### Intrinsic Viscosity (IV)

The sample is dissolved in tetrahydronaphthalene at 135 °C and then poured into a capillary viscometer. The viscometer tube (Ubbelohde type) is surrounded by a cylindrical glass jacket; this setup allows for temperature control with a circulating thermostatic liquid. The downward passage of the meniscus is timed by a photoelectric device.

The passage of the meniscus in front of the upper lamp starts the counter which has a quartz crystal oscillator. The meniscus stops the counter as it passes the lower lamp and the efflux time is registered: this is converted into a value of intrinsic viscosity through Huggins' equation (Huggins, M.L., J. Am. Chem. Soc., 1942, 64, 2716) provided that the flow time of the pure solvent is known at the same experimental conditions (same viscometer and same temperature). One single polymer solution is used to determine [ $\eta$ ].

**Polydispersity index:** Determined at a temperature of 200 °C by using a parallel plates rheometer model RMS-800 marketed by RHEOMETRICS (USA), operating at an oscillation frequency which increases from 0.1 rad/sec to 100 rad/sec. From the crossover modulus one can derive the P.I. by way of the equation:

$$P.I. = 105/Gc$$

in which Gc is the crossover modulus which is defined as the value (expressed in Pa) at which G'=G" wherein G' is the storage modulus and G" is the loss modulus.

**Ethylene (C2) content**

**$^{13}$C NMR of propylene/ethylene copolymers**

$^{13}$C NMR spectra were acquired on a Bruker AV-600 spectrometer equipped with cryoprobe, operating at 160.91 MHz in the Fourier transform mode at 120°C.

The peak of the $S_{\beta\beta}$ carbon (nomenclature according to "Monomer Sequence Distribution in Ethylene-Propylene Rubber Measured by 13C NMR. 3. Use of Reaction Probability Mode " C. J. Carman, R. A. Harrington and C. E. Wilkes, Macromolecules, 1977, 10, 536) was used as internal reference at 29.9 ppm. The samples were dissolved in 1,1,2,2-tetrachloroethane-d2 at 120°C with a 8 % wt/v concentration. Each spectrum was acquired with a 90° pulse, 15 seconds of delay between pulses and CPD to remove 1H-13C coupling. 512 transients were stored in 32K data points using a spectral window of 9000 Hz.

The assignments of the spectra, the evaluation of triad distribution and the composition were made according to Kakugo ("Carbon-13 NMR determination of monomer sequence distribution in ethylene-propylene copolymers prepared with δ-titanium trichloride-diethylaluminum chloride" M. Kakugo, Y. Naito, K. Mizunuma and T. Miyatake, Macromolecules 1982, 15, 4, 1150-1152) using the following equations:

$$PPP = 100\ T_{\beta\beta}/S \qquad PPE = 100\ T_{\beta\delta}/S \qquad EPE = 100\ T_{\delta\delta}/S$$
$$PEP = 100\ S_{\beta\beta}/S \qquad PEE = 100\ S_{\beta\delta}/S \qquad EEE = 100\ (0.25\ S_{\gamma\delta}+0.5\ S_{\delta\delta})/S$$

$$S = T_{\beta\beta} + T_{\beta\delta} + T_{\delta\delta} + S_{\beta\beta} + S_{\beta\delta} + 0.25\ S_{\gamma\delta} + 0.5\ S_{\delta\delta}$$

The molar percentage of ethylene content was evaluated using the following equation:

E% mol = 100 * [PEP+PEE+EEE]The weight percentage of ethylene content was evaluated using the following equation:

$$E\%\ wt. = \frac{100 * E\%\ mol * MW_E}{E\%\ mol * MW_{E} + P\%\ mol * MW_P}$$

where P% mol is the molar percentage of propylene content, while $MW_E$ and $MW_P$ are the molecular weights of ethylene and propylene, respectively.

The product of reactivity ratio $r_1r_2$ was calculated according to Carman (C.J. Carman, R.A. Harrington and C.E. Wilkes, Macromolecules, 1977; 10, 536) as:

$$r_1r_2 = 1 + \left( \frac{EEE + PEE}{PEP} + 1 \right) - \left( \frac{P}{E} + 1 \right)\left( \frac{EEE + PEE}{PEP} + 1 \right)^{0.5}$$

The tacticity of Propylene sequences was calculated as mm content from the ratio of the PPP $mmT_{\beta\beta}$ (28.90-29.65 ppm) and the whole $T_{\beta\beta}$ (29.80-28.37 ppm).

**Samples for the mechanical tests**

Samples have been obtained according to ISO 1873-2:2007.

**Charpy impact test** is determined according to ISO 179-1eA, and ISO 1873-2

**Elongation at yield:** measured according to ISO 527.

**Elongation at break:** measured according to ISO 527. The values reported in the tables are mean values of the measurements in MD and TD.

**Stress at break:** measured according to ISO 527. The values reported in the tables are mean values of the measurements in MD and TD.

**Tensile Modulus** according to ISO 527-2. The values reported in the tables are mean values of the measurements in MD and TD.

**Tear Resistance** according to the method ASTM D 1004 on 1mm-thick extruded sheets. Crosshead speed: 51 mm/min; V-shaped die cut specimen. The values reported in the tables are mean values of the measurements in MD and TD.

**Shore D** on injection molded, compression molded plaques and extruded sheets according to the method ISO 868 (15 sec)

## Melting point and crystallization point

The melting point has been measured by using a DSC instrument according to ISO 11357-3, at scanning rate of 20C/min both in cooling and heating, on a sample of weight between 5 and 7 mg., under inert $N_2$ flow. Instrument calibration made with Indium.

EXAMPLES

## Comparative Example 1

A composition (I) was prepared according to the procedure reported in comparative Example 1 of WO03/011962. The characterization is reported in table 1.

## r-SBS(1)

It was used a pre-consumer recycled SBS material having a MFR of 4.1 g/10' and 88% of solubility in xylene at 25°C. The r-SBS also contained 3%wt of talc, 3%wt of propylene homopolymer and 4%wt of ethylene polymer. The characterization is reported in table 1.

## Example 1

The polymer particles of the heterophasic composition (I) prepared in comparative example 1 are introduced in an extruder (Berstorff extruder), wherein they are mixed with 10% wt (based on the total amount of polyolefins) of recycled SBS(1) described above and 1000 ppm of M.S. 168 as an additive. The polymer particles are extruded under nitrogen atmosphere in a twin screw extruder, at a rotation speed of 250 rpm and a melt temperature of 200-250° C. The characterization of the obtained composition is reported in table 1.

## Example 2

A polymer composition was prepared according to the procedure of Example 1 with the difference that 20% of recycled SBS(1) was used. The characterization of the obtained composition is reported in table 1.

Table 1

| Examples and comparative examples | | C1 | r-SBS(1) | 1 | 2 |
|---|---|---|---|---|---|
| MFR [g/10 min] | | 0.6 | 4.1 | 0.8 | - |
| Tensile Modulus [N/mm$^2$] | | 110 | 42 | 76 | 76 |
| Stress at break [N/mm$^2$] | | 16.6 | - | 17.1 | 16.4 |
| Shore D [15sec] | | 30 | 20 | 26.8 | 26.2 |
| Tear Resistance [N] | | 74 | - | 75 | 74 |
| Elongation at break [%] | | 695 | 570 | 685 | 695 |
| Puncture Resistance | Max force [N] | 249 | - | 240.0 | 218.0 |
| | Deformation at break [mm] | 45.5 | - | 41.0 | 38.7 |

The above data show that the polymer compositions according to the present disclosure have an improved balance of softness and mechanical properties which does not result from the linear combination of components (A) and (B).

## Comparative Example 2

A further composition (II) was prepared according to the procedure reported in comparative Example 1 of WO03/011962. The characterization is reported in table 2.

r-SBS(2)

A pre-consumer recycled SBS material having a MFR of 7.4 g/10' and 39.3 wt.% of solubility in xylene at 25°C. The characterization is reported in table 2.

Example 3

A polymer composition was prepared according to the procedure of Example 1 with the difference that 10wt% of r-SBS(2) was mixed with 90wt% of the heterophasic composition (II). The characterization of the obtained composition is reported in table 2.

Example 4

A polymer composition was prepared according to the procedure of Example 3 with the difference that 15wt% of r-SBS(2) was used. The characterization of the obtained composition is reported in table 2.

Example 5

A polymer composition was prepared according to the procedure of Example 3 with the difference that 20wt% of r-SBS(2) was used. The characterization of the obtained composition is reported in table 2.

Table 2

| Examples and comparative examples | | C2 | rSBS(2) | 3 | 4 | 5 |
|---|---|---|---|---|---|---|
| MFR [g/10 min] | | 0.5 | 7.4 | 0.6 | 0.6 | 0.7 |
| Tensile Modulus [N/mm$^2$] | | 95 | 220 | 102 | 106 | 100 |
| Stress at break [N/mm$^2$] | | 18.2 | 14.5 | 18.0 | 19.7 | 19.2 |
| Shore D [15sec] | | 32.7 | 36.2 | 33.1 | 30.8 | 30.6 |
| Tear Resistance [N] | | 78 | - | 77 | 78 | 75 |
| Elongation at break [%] | | 725 | 660 | 715 | 730 | 734 |
| Puncture Resistance | Max force [N] | 276 | - | 260 | 260 | 259 |
| | Deformation at break [mm] | 48.2 | - | 42.0 | 42.3 | 42.3 |

**Claims**

1. A propylene polymer composition having a melt flow rate (ISO 1133 - 230°C/2.16 kg) ranging from 0.4 to 1.4 g/10min, comprising:

   (A) from 65 to 95% by weight of a polypropylene composition having a melt flow rate (ISO 1133 230°C/2.16 kg) ranging from 0.2 to 1.2 g/10min, said polypropylene composition comprising:

   - from 15 to 40% by weight of a polymer fraction (a) comprising a propylene homopolymer, or a copolymer of propylene with one or more comonomers selected from ethylene and a $CH_2$=CHR alpha-olefin, where R is a $C_2$-$C_8$ alkyl radical, or mixtures thereof, said copolymer containing at least 85% by weight of units derived from propylene, said polymer fraction (a) being insoluble in xylene at 25°C for at least 90% by weight; and
   - from 60 to 85% by weight of a polymer fraction (b) comprising a copolymer of ethylene with comonomers selected from propylene and $CH_2$=CHR alpha-olefins, where R is a $C_2$-$C_8$ alkyl radical, and optionally with minor quantities of a diene, or mixtures thereof. said copolymer containing units derived from ethylene in a quantity lower than 50% by weight, said polymer fraction (b) having solubility in xylene at room temperature (25°C) greater than 60% by weight, the total percentage of fractions (a) and (b) in the polypropylene composition (A) being 100, and

   (B) from 5 to 35% by weight of a recycled styrene block copolymer (SBC) having a melt flow rate (ISO 1133 - 230°C/2.16 kg) from 0.5 to 15 g/10 min; the percentages of (A) and (B) being referred to the sum of (A) and (B).

2. The propylene polymer composition according to claim 1 wherein the component (A) ranges from 70% to 93%, by weight and component (B) ranges from 7% to 30% by weight.

3. The propylene polymer composition according to claim 1 or 2 wherein the fraction (a) ranges from 28% to 40% by weight and the polymer fraction (b) ranges from 60% to 72%wt.

4. The propylene polymer composition according to anyone of claims 1-3 having a melt flow rate (ISO 1133 230°C/2.16 kg) ranging from 0.5 to 1.2 g/10 min.

5. The propylene polymer composition according to anyone of claims 1-4 in which the polypropylene composition (A) has a melt flow rate ranging from 0.3 to 1.0 g/10min.

6. The propylene polymer composition according to anyone of claims 1-5 wherein the total ethylene content of polypropylene composition (A) ranges from 15.0% to 28.0% by weight.

7. The propylene polymer composition according to anyone of claims 1-6 wherein the polypropylene composition (A) has a tensile modulus value ranging from 40 to 250 MPa.

8. The propylene polymer composition according to anyone of claims 1-7 wherein the polypropylene composition (A) has a value of Shore D (15 sec) from 25 to 40.

9. The propylene polymer composition according to anyone of claims 1-8 wherein component (B) includes minor amounts of heterogeneous polymers and/or non-polymeric components.

10. The propylene polymer composition according to anyone of claims 1-9 wherein component (B) contains from 1 to 15% wt of other components selected from polyethylene, polypropylene and inorganic material.

11. The propylene polymer composition according to anyone of claims 1-10 wherein the recycled styrene block copolymer (B) contains a propylene homopolymer, an ethylene polymer and talc as inorganic additive.

12. The propylene polymer composition according to anyone of claims 1-11 having a tensile modulus value lower than that of the polypropylene composition (A).

13. The propylene polymer composition according to anyone of claims 1-12 having a value of Shore D (15 sec) lower than that of the polypropylene composition (A).

14. An extruded article obtained from the propylene polymer composition according to any one of the preceding claims.

15. Sheets for roofing applications obtained from the propylene polymer composition according to any one of the preceding claims.

**Patentansprüche**

1. Propylenpolymerzusammensetzung mit einer Schmelzflussrate (ISO 1133 - 230 °C/2,16 kg) im Bereich von 0,4 bis 1,4 g/10 min, umfassend:

    (A) 65 bis 95 Gew.% einer Polypropylenzusammensetzung mit einer Schmelzflussrate (ISO 1133 230 °C/2,16 kg) im Bereich von 0,2 bis 1,2 g/10 min, wobei die Polypropylenzusammensetzung umfasst:

       - 15 bis 40 Gew.% einer Polymerfraktion (a), umfassend ein Propylenhomopolymer oder ein Copolymer von Propylen mit einem oder mehreren Comonomeren ausgewählt aus Ethylen und einem $CH_2=CHR$ alpha-Olefin, wobei R ein $C_2$-$C_8$-Alkylrest ist, oder Mischungen davon, wobei das Copolymer mindestens 85 Gew.% von Propylen abgeleitete Einheiten enthält, wobei die Polymerfraktion (a) in Xylol bei 25 °C zu mindestens 90 Gew.% unlöslich ist; und
       - 60 bis 85 Gew.% einer Polymerfraktion (b), umfassend ein Copolymer von Ethylen mit Comonomeren ausgewählt aus Propylen und $CH_2=CHR$ alpha-Olefinen, wobei R ein $C_2$-Cs-Alkylrest ist, und gegebenenfalls mit geringeren Mengen eines Diens, oder Mischungen davon, wobei das Copolymer von Ethylen abgeleitete Einheiten in einer Menge kleiner als 50 Gew.% enthält, wobei die Polymerfraktion (b) eine Löslichkeit in Xylol bei Raumtemperatur (25 °C) von mehr als 60 Gew.% aufweist, wobei der gesamte Prozentsatz der Fraktionen (a) und (b) in der Polypropylenzusammensetzung (A) 100 beträgt, und

(B) 5 bis 35 Gew.% eines recycelten Styrolblockcopolymers (SBC) mit einer Schmelzflussrate (ISO 1133 - 230°C/2,16 kg) von 0,5 bis 15 g/10 min; wobei die Prozentsätze von (A) und (B) sich auf die Summe von (A) und (B) beziehen.

2. Propylenpolymerzusammensetzung nach Anspruch 1, wobei die Komponente (A) im Bereich von 70 Gew.% bis 93 Gew.% liegt, und Komponente (B) im Bereich von 7 Gew.% bis 30 Gew.% liegt.

3. Propylenpolymerzusammensetzung nach Anspruch 1 oder 2, wobei die Fraktion (a) im Bereich von 28 Gew.% bis 40 Gew.% liegt, und die Polymerfraktion (b) im Bereich von 60 Gew.% bis 72 Gew.% liegt.

4. Propylenpolymerzusammensetzung nach einem der Ansprüche 1 bis 3 mit einer Schmelzflussrate (ISO 1133, 230 °C/2,16 kg) im Bereich von 0,5 bis 1,2 g/10 min.

5. Propylenpolymerzusammensetzung nach einem der Ansprüche 1 bis 4, wobei die Polypropylenzusammensetzung (A) eine Schmelzflussrate im Bereich von 0,3 bis 1,0 g/10 min aufweist.

6. Propylenpolymerzusammensetzung nach einem der Ansprüche 1 bis 5, wobei der Gesamtethylengehalt der Polypropylenzusammensetzung (A) im Bereich von 15,0 Gew.% bis 28,0 Gew.% liegt.

7. Propylenpolymerzusammensetzung nach einem der Ansprüche 1 bis 6, wobei die Polypropylenzusammensetzung (A) einen Zugmodulwert im Bereich von 40 bis 250 MPa aufweist.

8. Propylenpolymerzusammensetzung nach einem der Ansprüche 1 bis 7, wobei die Polypropylenzusammensetzung (A) einen Wert von Shore D (15 Sekunden) von 25 bis 40 aufweist.

9. Propylenpolymerzusammensetzung nach einem der Ansprüche 1 bis 8, wobei Komponente (B) geringe Mengen an heterogenen Polymeren und/oder nicht-polymeren Komponenten einschließt.

10. Propylenpolymerzusammensetzung nach einem der Ansprüche 1 bis 9, wobei Komponente (B) 1 bis 15 Gew.% andere Komponenten ausgewählt aus Polyethylen, Polypropylen und anorganischem Material enthält.

11. Propylenpolymerzusammensetzung nach einem der Ansprüche 1 bis 10, wobei das recycelte Styrolblockcopolymer (B) ein Propylenhomopolymer, ein Ethylenpolymer und Talkum als anorganisches Additiv enthält.

12. Propylenpolymerzusammensetzung nach einem der Ansprüche 1 bis 11 mit einem Zugmodulwert unter demjenigen der Polypropylenzusammensetzung (A).

13. Propylenpolymerzusammensetzung nach einem der Ansprüche 1 bis 12 mit einem Wert von Shore D (15 Sekunden) unter demjenigen der Polypropylenzusammensetzung (A).

14. Extrudierter Artikel, der aus der Propylenpolymerzusammensetzung gemäß einem der vorhergehenden Ansprüche erhalten wird.

15. Bahnen für Bedachungsanwendungen, die aus der Propylenpolymerzusammensetzung gemäß einem der vorhergehenden Ansprüche erhalten werden.

**Revendications**

1. Composition de polymère de propylène présentant un indice de fluidité à chaud (ISO 1133 à 230 °C/2,16 kg) situé dans la plage de 0,4 à 1,4 g/10 min, comprenant :

(A) 65 à 95 % en poids d'une composition de polypropylène présentant un indice de fluidité à chaud (ISO 1133 à 230 °C/2,16 kg) situé dans la plage de 0,2 à 1,2 g/10 min, ladite composition de polypropylène comprenant :

- 15 à 40 % en poids d'une fraction polymère (a) comprenant un homopolymère de propylène ou un copolymère de propylène avec un ou plusieurs comonomères choisis parmi l'éthylène et une alpha-oléfine $CH_2=CHR$, où R représente un radical alkyle en $C_2$-$C_8$, ou leurs mélanges, ledit copolymère contenant au moins 85 % en poids de motifs dérivés du propylène, ladite fraction polymère (a) étant insoluble dans le xylène à 25 °C à raison d'au moins 90 % en poids ; et

- 60 à 85 % en poids d'une fraction polymère (b) comprenant un copolymère d'éthylène avec des comonomères choisis parmi le propylène et les alpha-oléfines $CH_2=CHR$, où R représente un radical alkyle en $C_2$-$C_8$, et éventuellement avec des quantités mineures d'un diène, ou leurs mélanges, ledit copolymère contenant des motifs dérivés de l'éthylène en une quantité inférieure à 50 % en poids, ladite fraction polymère (b) présentant une solubilité dans le xylène à température ambiante (25 °C) supérieure à 60 % en poids, le pourcentage total des fractions (a) et (b) dans la composition de polypropylène (A) valant 100 et

(B) 5 à 35 % en poids d'un copolymère séquencé de styrène recyclé (SBC) présentant un indice de fluidité à chaud (ISO 1133 à 230 °C/2,16 kg) de 0,5 à 15 g/10 min ; les pourcentages de (A) et (B) se rapportant à la somme de (A) et (B).

2. Composition de polymère de propylène selon la revendication 1, le constituant (A) étant situé dans la plage de 70 % à 93 % en poids et le constituant (B) étant situé dans la plage de 7 % à 30 % en poids.

3. Composition de polymère de propylène selon la revendication 1 ou 2, la fraction (a) étant située dans la plage de 28 % à 40 % en poids et la fraction polymère (b) étant située dans la plage de 60 % à 72 % en poids.

4. Composition de polymère de propylène selon l'une quelconque des revendications 1 à 3 présentant un indice de fluidité à chaud (ISO 1133 à 230 °C/2,16 kg) situé dans la plage de 0,5 à 1,2 g/10 min.

5. Composition de polymère de propylène selon l'une quelconque des revendications 1 à 4, dans laquelle la composition de polypropylène (A) présente un indice de fluidité à chaud situé dans la plage de 0,3 à 1,0 g/10 min.

6. Composition de polymère de propylène selon l'une quelconque des revendications 1 à 5, la teneur totale en éthylène de la composition de polypropylène (A) étant située dans la plage de 15,0 % à 28,0 % en poids.

7. Composition de polymère de propylène selon l'une quelconque des revendications 1 à 6, la composition de polypropylène (A) présentant une valeur de module de traction située dans la plage de 40 à 250 MPa.

8. Composition de polymère de propylène selon l'une quelconque des revendications 1 à 7, la composition de polypropylène (A) présentant une valeur Shore D (15 sec) de 25 à 40.

9. Composition de polymère de propylène selon l'une quelconque des revendications 1 à 8, le constituant (B) comprenant des quantités mineures de polymères hétérogènes et/ou de constituants non polymères.

10. Composition de polymère de propylène selon l'une quelconque des revendications 1 à 9, le constituant (B) contenant 1 à 15 % en poids d'autres constituants choisis parmi le polyéthylène, le polypropylène et du matériau inorganique.

11. Composition de polymère de propylène selon l'une quelconque des revendications 1 à 10, le copolymère séquencé de styrène recyclé (B) contenant un homopolymère de propylène, un polymère d'éthylène et du talc en tant qu'additif inorganique.

12. Composition de polymère de propylène selon l'une quelconque des revendications 1 à **11** présentant une valeur de module de traction inférieure à celle de la composition de polypropylène (A).

13. Composition de polymère de propylène selon l'une quelconque des revendications 1 à 12 présentant une valeur Shore D (15 sec) inférieure à celle de la composition de polypropylène (A).

14. Article extrudé obtenu à partir de la composition de polymère de propylène selon l'une quelconque des revendications précédentes.

15. Feuilles pour des applications de toiture obtenues à partir de la composition de polymère de propylène selon l'une quelconque des revendications précédentes.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 472946 A
- WO 03011962 A
- WO 2013144060 A
- WO 2017122022 A
- US 2018237625 A
- US 4522930 A
- EP 045977 A2
- WO 0063261 A
- WO 0157099 A
- US 4399054 A
- US 4469648 A

### Non-patent literature cited in the description

- **HUGGINS, M.L.** *J. Am. Chem. Soc.*, 1942, vol. 64, 2716
- **C. J. CARMAN** ; **R. A. HARRINGTON** ; **C. E. WILKES**. Monomer Sequence Distribution in Ethylene-Propylene Rubber Measured by 13C NMR. 3. Use of Reaction Probability Mode. *Macromolecules*, 1977, vol. 10, 536
- **M. KAKUGO** ; **Y. NAITO** ; **K. MIZUNUMA** ; **T. MIYATAKE**. Carbon-13 NMR determination of monomer sequence distribution in ethylene-propylene copolymers prepared with $\delta$-titanium trichloride-diethylaluminum chloride. *Macromolecules*, 1982, vol. 15 (4), 1150-1152
- **C.J. CARMAN** ; **R.A. HARRINGTON** ; **C.E. WILKES**. *Macromolecules*, 1977, vol. 10, 536